# EUROPEAN PATENT SPECIFICATION

(11) **EP 3 947 485 B1**
(45) Date of publication and mention of the grant of the patent: **07.10.2026**
(21) Application number: 20783818.6
(22) Date of filing: 02.04.2020
(51) Int. Cl.: C08F 220/14, C08J 5/18, G02B 1/08, G02B 1/04

(54) **HYDROPHOBIC HIGH HEAT OPTICAL ACRYLIC COPOLYMERS**
COPOLYMERE MIT HOHER GLASÜBERGANGSTEMPERATUR
COPOLYMÈRES ACRYLIQUES OPTIQUES HAUTE TEMPÉRATURE HYDROPHOBES

(30) Priority: 04.04.2019 US 201962829183 P
(43) Date of publication of application: 09.02.2022
(73) Proprietor: Trinseo Europe GmbH, 8808 Pfaeffikon (CH); Ge, Jiaxin J., Lower Providence, Pennsylvania 19403 (US)
(72) Inventor: SESHADRI, Sri R., Holland, Pennsylvania 18966 (US); HALL, Gary A., Oaklyn, New Jersey 08107 (US); GE, Jiaxin J., Lower Providence, Pennsylvania 19403 (US)
(74) Representative: SSM Sandmair
(86) International application number: PCT/US2020/026377
(87) International publication number: WO 2020/206113

(56) References cited:
- EP-A1- 2 789 634
- WO-A1-89/06248
- JP-A- 2002 161 112
- JP-A- 2014 205 853
- JP-A- H02 233 710
- KR-A- 20170 004 719
- US-A1- 2009 074 695
- US-A1- 2015 038 634
- US-A1- 2015 044 161
- US-B2- 7 101 930
- US-B2- 7 795 348
- US-B2- 9 725 548

## Description

### FIELD OF THE INVENTION

The invention relates to acrylic copolymers and terpolymers incorporating high Tg, hydrophobic (meth)acrylates and derivatives that have high thermal stability and excellent optical properties. These copolymers are optically clear, and provide a copolymer having a Tg of 115-150°C, along with sufficiently high molecular weight. The copolymer is found to exhibit high heat resistance, high light transmission, low haze, low moisture uptake, excellent environmental stability, excellent high temperature thermal stability, and excellent mechanical properties, along with excellent UV resistance. The copolymer, or terpolymer may be used to form lighting pipes, thin wall parts, optical lenses, extruded films, (co-)extruded sheets/profiles, thermo-formable sheets, cast sheets, composites, etc.

### BACKGROUND OF THE INVENTION

Thermoplastic polymers and copolymers, especially (meth)acrylic polymers, have excellent characteristics such as transparency, mechanical properties and processability and are widely used in various fields such as automobile parts, electrical parts, industrial parts, optical materials, various parts of household electrical appliances, aesthetical parts, miscellaneous goods and the like.

High Tg acrylic polymers are useful in applications requiring a high optical clarity and high heat resistance, such as automotive front inner lenses, thin wall parts, lighting pipes, optical protection/retardation films in electronic devices, solar panels/films, home appliance, composites, and others. It is expected the market for high heat acrylic copolymers in automotive LED front inner lenses and thin wall parts will rapidly increase. In addition, high heat acrylic films are also used in LED/OLED displays.

High Tg acrylic copolymers, such as methyl methacrylate/methacrylic acid copolymer are described in US 2018-0362688.

US 10,043,930 describes high Tg acrylic copolymers, using a variety of high Tg comonomers, for use in photovoltaic front sheets. JP H02 233710 describes low hygroscopic methacrylic resins comprising tertbutylcyclohexyl methacrylate units, methyl methacrylate units and cyclohexyl methacrylate units. The resisn show colorlessness, transparency, heat resistance, low birefringence, thermal stability, low hygroscopicity, further excellent in moldability and they can be used as optical materials.

A major problem with standard acrylic copolymers and products is the inability to pass a long-term environmental stability testing such as 85°C/85%RH test, as required for automotive front inner lenses, solar panels, and new optical films in electronics. Most high Tg monomers, such as methacrylic acid are hydrophilic, and its copolymers are not resistant to moisture.

The inventors have now surprisingly solved this problem, and have produced a material capable of passing an environmental stability test, while maintaining a high Tg and high optical clarity. The novel copolymers contain high Tg hydrophobic monomers to increase the hydrophobicity of the copolymer, while maintaining a high Tg and high molecular weight. The resulting high molecular weight, high Tg, high optical property copolymer is useful in many different applications requiring high heat, and/or moist environments.

Specifically, hydrophobic co-monomers tert-butyl cyclohexyl (meth)acrylate having a specific cis/trans ratio range, and 3,3,5, trimethyl cyclohexyl(meth)acrylate were found to copolymerize with pMMA to reduce the water absorption and enhance the hydrophobicity. In addition, a high Tg and/or Vicat temperature, high molecular weight was obtained. Films, sheets and articles made with the hydrophobic copolymer exhibited am light transmission of over 91% and a haze of less than 2.5%. The copolymer may include additional monomer units, making it a terpolymer, tetrapolymer, etc.

### SUMMARY OF THE INVENITON

The invention is indicated in the appended claims.

### DETAILED DESCRIPTION OF THE INVENITON

"Copolymer" is used to mean a polymer having two or more different monomer units, including copolymers, and polymers with three or more different monomers, such as terpolymers and tetrapolymers. "Polymer" is used to mean both homopolymer and copolymers. Polymers may be straight chain, branched, star, comb, block, or any other structure. The polymers may be homogeneous, heterogeneous, and may have a gradient distribution of co-monomer units. As used herein, unless otherwise described, percent shall mean weight percent. Molecular weight is a weight average molecular weight as measured by GPC. In cases where the polymer contains some cross-linking, and GPC cannot be applied due to an insoluble polymer fraction, soluble fraction / gel fraction or soluble faction molecular weight after extraction from gel is used.

By "hydrophobic" as used herein means that a 25 weight percent solution of the copolymer dissolved in toluene, when heated with stirring to 65°C to form opaque viscous gels-gelation, then allowed to cool to room temperature (23°C), is optically clear, along with some soft gels. Upon heating to 65°C, the physical gelation occurs throughout the whole "solution" while the viscous "solution" becomes opaque, resulting in a viscous jelly-like material due to two phase separations of hydrophilic copolymers in hydrophobic solvent (such as toluene) at a high temperature (65°C). In addition, it is a physically reversible process.

By "(meth)acrylic" or "(meth)acrylate" as used herein denotes both the acrylate and the methacrylate.

In one embodiment, the hydrophobic copolymer of the invention passes an 85°C/85%RH test.

The invention relates to a copolymer of methyl methacrylate, methacrylic acid and and specific hydrophobic, high Tg comonomers. "high Tg monomer" refers to a monomer, that when polymerized produces a polymer having a Tg of greater than 116°C, and preferably greater than 120°C, and more preferably of greater than 130°C. Examples of useful hydrophobic, high Tg monomers include, but are not limited to, tert-butyl cyclohexyl methacrylate as a specific blend range of trans/cis isomers, and 3,3,5-trimethylcyclohexyl(meth)acrylate, and its isomer blends.

### Tert-butyl cyclohexyl methacrylate

Tert-butyl cyclohexyl (meth)acrylate has the structural formulas below:

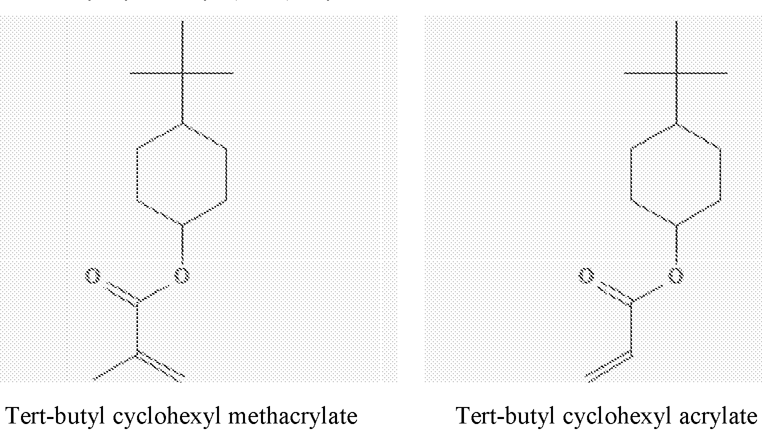

The monomer is a mixture of the cis- and trans- forms, having a trans/cis ratio of between 30/70 and 85/15, preferably 40/60 to 80/20, and more preferably 50/50 to 75/25.

The level of tert-butyl cyclohexyl (meth)acrylate in the final copolymer generally ranges from 0.2 - 20 weight percent, and more preferably from 0.5 to 10 weight percent of tert-butyl cyclohexyl methacrylate is used in the copolymer. It has been found that as little as 1 weight percent, and even 0.5 weight percent of tert-butyl cyclohexyl methacrylate, provides a copolymer having a hydrophobic character. The Tg of the copolymer of the invention is from 115°C to 150°C, preferably from 116°C to 140°C.

### 3,3,5-trimethylcyclohexyl(meth)acrylate

3,3,5-trimethylcyclohexyl(meth)acrylate has the structural formulas below:
The monomer is a mixture of the cis- and trans- forms.

The level of 3,3,5-trimethylcyclohexyl(meth)acrylate in the final copolymer generally ranges from 0.2 - 20 weight percent, and more preferably from 0.5 to 10 weight percent of tert-butyl cyclohexyl methacrylate is used in the copolymer. It has been found that as little as 1 weight percent, and even 0.5 weight percent of tert-butyl cyclohexyl methacrylate, provides a copolymer having a hydrophobic character. The Tg of the copolymer of the invention is from 116°C to 135°C.

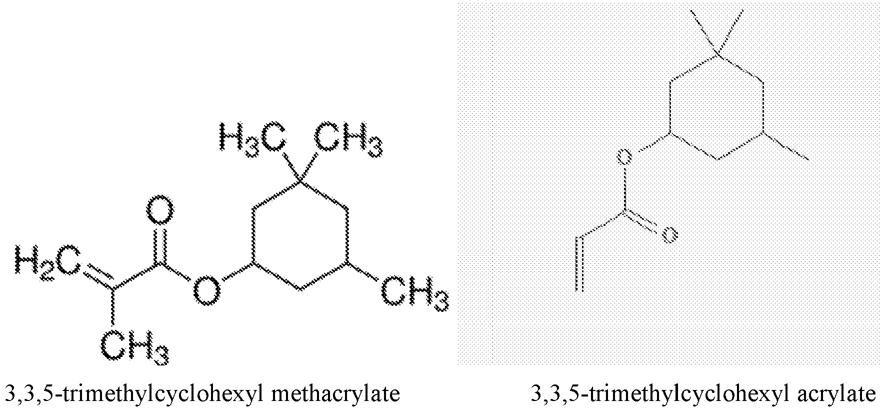

The level of tert-butyl cyclohexyl methacrylate or 3,3,5-trimethylcyclohexyl methacrylate in the final copolymer generally ranges from 0.2 - 20 weight percent, and more preferably from 0.5 to 10 weight percent based on the total monomer units in the copolymer. It has been found that as little as 1 weight percent, and even 0.5 weight percent of tert-butyl cyclohexyl methacrylate, provides a copolymer having a hydrophobic character. The Tg of the copolymer of the invention is from 115°C to 150°C, preferably from 116°C to 140°C.

### Acrylic monomers, MMA

One or more of the hydrophobic, high Tg monomers, is copolymerized with one or more other monomers. In a preferred embodiment of the invention the copolymer contains at least 50 weight percent of methylmethacrylate monomer units, preferably at least 70 weight percent and more preferably at least 80 weight percent methylmethacrylate monomer units make up the copolymer.

The copolymer of the invention, in addition to the hydrophobic, high Tg monomer(s), and methyl methacrylate, may include 0 to 49.5 weight percent of other acrylate and methacrylate monomers or other ethylenically unsaturated monomers, included but not limited to, styrene, alpha methyl styrene, acrylonitrile, and crosslinkers at low levels may also be present in the monomer mixture. Suitable acrylate and methacrylate comonomers include, but are not limited to, methyl acrylate, ethyl acrylate and ethyl methacrylate, butyl acrylate and butyl methacrylate, iso-octyl methacrylate and iso-octyl acrylate, lauryl acrylate and lauryl methacrylate, stearyl acrylate and stearyl methacrylate, isobornyl acrylate and isobornyl methacrylate, methoxy ethyl acrylate and methoxy methacrylate, 2-ethoxy ethyl acrylate and 2-ethoxy ethyl methacrylate, and dimethylamino ethyl acrylate and dimethylamino ethyl methacrylate monomers. (Meth) acrylic acids such as methacrylic acid and acrylic acid can be useful for the monomer mixture. In addition to carboxyl functionality, other functionality can be added to the high molecular weight acrylic process aid through functional comonomers, including epoxy (such as glycidyl methacrylate), hydroxyl, and anhydride functional groups. Functional monomer units (monomer units having a functional group) can be present at up to 70 weight percent of the acrylic polymer, preferably up to 50 weight percent.

The acrylic copolymer has a high Tg of greater than 115°C, more preferably greater than 120°C, greater than 125°C, greater than 130°C, greater than 135°C, and even greater than 140°C. In addition to the tert-butyl cyclohexyl methacrylate and 3,3,5-trimethylcyclohexyl(meth)acrylate, methacrylic acid is present in amount of 0.01 to 10 weight percent, preferably 0.1 to 5 weight percent. Other high Tg monomers may optionally be present at levels of 0 to 25 weight percent, and more preferably from 0 to 10 weight percent. The other high Tg monomers may be hydrophilic, hydrophobic or have a neutral character, and include, but are not limited to acrylic acid, itaconic acid, alpha methyl styrene, maleic anhydride, maleimide, isobornyl methacrylate, norbornyl methacrylate, t-butyl methacrylate, cyclohexyl methacrylate, acrylamide and methacrylamide.

In one embodiment it was found that the hydrophobic effect of the tert-butyl cyclohexyl methacrylate and/or 3,3,5-trimethylcyclohexyl(meth)acrylate is strong enough to overcome the hydrophilic effect of hydrophilic comonomers used at lower levels, to produce an over-all hydrophobic copolymer.

### Synthesis process

The copolymers of the invention are obtained through melt polymerization, including but not limited to solution polymerization, emulsion polymerization, and suspension polymerization.

It was found that the process conditions can have a significant effect on the Tg of the copolymer. In general, solution polymerization of the copolymer was found to produce a higher level of syndiotacticity (~60%) and a higher Tg than those (~50%) in copolymers produced in a melt process. In a lab solution process run at about 65-75°C, the Tg of the copolymer was found to be about 124°C. In a pilot plant melt polymer process run at about 160°C, the Tg was found to be about 120°C. While not being bound by any particular theory, it is believed that the difference in copolymer Tg is related to the syndiotacticity percentage, which is higher at a lower process temperature. In addition, toluene used in solution polymerization may have different chemical environments.

### Additives

The copolymer of the invention can be blended with typical additives used in thermoplastics. These include, but are not limited to fillers, surface modifying additives, antioxidants, UV screens, processing aids, fibers, lubricant agents, heat stabilizers, flame retardants, synergists, pigments and other coloring agents.

While impact modifiers could be added to the composition, they would have a negative effect on the optical clarity. If used, they would need to be refractive index matched to the matrix, meaning a refractive index difference with the matrix of less than 0.02, and preferably less than 0.01. Preferably, the compostion contains no impact modifier.

Other polymer additives could include polycarbonates, polyurethanes, polysulfones, polyamides, polyolefin including copolymers and terpolymers based on these polymers, and including linear, branched, block, and grafted polymer structures. Examples of matting agents include, but are not limited to, cross-linked polymer particles of various geometries. The amount of filler and additives included in the polymer compositions of each layer may vary from about 0.01% to about 70% of the combined weight of polymer, additives and filler. Generally, amounts from about 5% to about 45%, from about 10% to about 40%, are included.

### Antioxidants

In one embodiment, selected antioxidants may be used to improve the thermal stability of the resins at high temperature such as 255-275°C and reduce the yellowing at high temperature. The loading of the antioxidants in the final resins formulations are at the levels of ~50 ppm to 3500 ppm, preferably about 100 ppm to about 2500 ppm based on the total weight of the composition. Non-limiting examples of useful antioxidants include sterically hindered phenols, organophosphites hindered amine light stabilizers (HALS), benzotriazoles, triazines, benzophenones, and cyanoacrylates.

### Properties

The novel hydrophobic high heat acrylic materials of the invention are designed to meet the requirement of high light transmission in the visible wavelength region, extremely low haze, high heat resistance, low water/moisture uptake, excellent environmental stability, and excellent mechanical properties, optionally with excellent UV resistance, making them especially useful in certain high heat, high optical clarity applications.

The Tg of the copolymers ranges from 115°C - 150°C, preferably from 116°C to 140°C, and more preferably from 120°C to 130°C.

The weight average molecular weight of the acrylic copolymers is greater than 55,000 g/mole, preferably greater than 75,000 g/mole, more preferably greater than 90,000 g/mole, and even more preferably greater than 100,000 g/mole. The maximum molecular weight is about 250,000 g/mole, and more preferably about 200,000 g/mole

The hydrophobic high Tg copolymers of the invention, including co-, ter-, and tetrapolymers of the invention possess a refractive index of 1.47-1.50 at the wavelength of 589 nm.

The copolymer provides a low moisture adsorption and enhanced hydrophobicity.

The copolymers of the invention have excellent optical properties, with a TWLT of at least 89%, preferably at least 91% and more preferably at least 92%; and an optical haze of less than 5%, preferably less than 3% and most preferably less than 2%.

In addition to the above properties, the copolymer of the invention has excellent environmental stability, and excellent mechanical properties, along with excellent UV resistance.

Blends of the high Tg copolymers of the invention with other polymers, and especially acrylic polymers is anticipated by the invention. The high Tg copolymers or terpolymers of the invention (with the refractive index of 1.47-1.50) are optically and physically compatible with many typical optical acrylic copolymers (with a refractive index of about 1.49) in their mixtures and /or combinations through melt processing/solution blends. The copolymer of the invention would typically be blended with other acrylic resins at 5 to 95 weight percent, preferably 5 to 75 weight percent, and more preferably at 10 to 60 weight percent of the total polymer solids.

Blends with other compatible polymers, in all ratios, are also anticipated by this invention. Especially useful compatible polymers for a blend include, but are not limited to, other poly(methyl methacrylate) copolymers such as pMMA-EA and PMMA-MA, poly(styreneacrylonitrile, SAN), polyvinylidene fluoride, copolymers of vinylidene fluoride and hexafluoropropene, and polylactic acid.

### Uses

The copolymers of the invention are thermoplastic, and can be easily shaped into sheets, films, light pipe and lenses
The excellent heat stability, high molecular weight, moisture resistance and excellent optical properties, makes the copolymer of the invention especially useful for forming lighting pipes, thin wall parts, optical lenses, extruded films, (co-)extruded sheets/profiles, thermo-formable sheets, cast sheets, composites, and others.

High heat acrylic films of the invention may be used in LED/OLED displays. If cost-effective OLED technologies are widely used to replace LED/LCD technologies, the number of optical polarizers for OLED may be reduced.

Within this specification embodiments have been described in a way which enables a clear and concise specification to be written, but it is intended and will be appreciated that embodiments may be variously combined or separated without parting from the invention. For example, it will be appreciated that all preferred features described herein are applicable to all aspects of the invention described herein.

### EXAMPLES

### Testing methods:

A. Melt flow rate (MFR) measurement: Instron Ceast MF30 equipment was used for polymers in melt flow rate measurements. The die temperature was controlled at 230°C while the loading cell weight was at 3.8kg. The dried pellets were used near 20°C below the T_{g} over 8 hours.
B. Gel permeation chromatography (GPC): Waters Alliance 2695 and Waters Differential Refractometer 2410 were used to make polymer molecular weight measurements. Columns were based on two PL Gel mixed C columns and a guard column (7.8 mm I.D. × 30 cm, 5 µm). THF (HPLC grade) was selected as a solvent. Temperature was controlled at 35 °C. Ten poly(methyl methacrylate) standards were used in the calibration, ranging in Mₚ (peak molecular weight) from 550 to 1,677,000 g/mole.
C. Differential scanning calorimetry (DSC): The glass transition temperatures of acrylic polymers were measured at a heating rate of 10°C/minutes in N₂ using TA instruments Q2000 DSC, during the second heating. The first heating was used to heat the sample to 170°C at a heating rate of 10°C/minute, then, the sample was cooled down to 0°C at a cooling rate of 10°C/minute. The sample weight was controlled at 5-10 mg.
D. Thermogravimetry (TGA): The thermal decomposition temperatures of acrylic polymers were measured at a heating rate of 10°C/minute in N₂ using TA instruments Q5000 TGA. The sample weight was controlled at 5-10 mg. The samples were pre-dried under a vacuum oven at 100°C overnight.
E. Total light transmission: The total light transmission was measured from film and/or plaque samples in a transmission mode using Perkin Elmer Lambda 950 with a 150 mm integrating sphere. The selected UV/Vis wavelength range was from 200nm to 800nm in UV/Vis region.
F. Haze: Optical haze of clear film and/or plaque samples was measured using BYK HazeGard Plus under ASTM method D1003.
G. Tensile strength and elongation: The tensile strength, modulus and elongation of the tensile bars was evaluated using Instron Model 4202 at the crosshead speed of 5mm/minute using ASTM D638 method after being preconditioned at 23°C/48 hours. The tensile was at 6" in length while the width was at 0.50". The sample thickness was at 0.125".
H. Refractive index: Refractive index of the polymer film was measured at three different wavelengths of 402nm, 518nm, and 636.5nm using an optical prism coupler Metricon 2010 from Metricon Inc while the refractive index was calculated at a selected wavelength of 589nm.
I. NMR: Samples were prepared by dissolving ~200 mg of pellets in ~4 ml CDCl₃ in separate 10 mm NMR tubes for ¹³C NMR. The ¹H spectra were acquired on the Bruker AV III HD 500 (11.07 T) spectrometer with a 5 mm ¹H/¹⁹F/¹³C TXO probe at 25°C before and after derivatization of MAA. The ¹³C spectra were acquired on the Bruker AV 400 (9.4 T) with a 10 mm BBO probe at 50 °C.
J. Vicat softening temperatures: The samples were tested in Instron HV6M under 10N and 50N external forces using ASTM method D1525. The sample heating rate was controlled at the speed of 50°C/hour. The injection molded samples were annealed at ~20C below the Tg value for 16 hours and were kept in a desiccator oven before testing.
K. Water absorption: The injection molded samples were immersed in a D. I. water bath (23°C) using ASTM method D570. The plaque sample size was molded at 45mm (width) x 67mm (length) x 3.2mm (thickness). The water absorption value was measured based on the weight gain while the sample surfaces were cleaned up with dry tissues.
L. 85°C/85% RH testing: The injection molded samples were held under 85°C/85%RH using a Thermotron SE-1000-6-6 environmental oven with D. I. water for a humidifier. The tensile bar size was molded at 12.5mm (width) x 165mm (length) x 3.2mm (thickness). The defects such as crazing and/or cracking lines were inspected visually during the 85°C/85%RH tests.

### pMMA-co-tert-butyl cyclohexyl methacrylate

### Example 1: (pMMA copolymer with 3.7% tert-butyl cyclohexyl methacrylate). (not according to the invention)

This example demonstrates the preparation of a high molecular weight copolymer of methyl methacrylate and tert-butyl cyclohexyl methacrylate, having a 51% trans/49% cis isomer ratio. 96.30 parts of methyl methacrylate and 3.70 parts of tert-butyl cyclohexyl methacrylate were charged into a reaction vessel containing 300 parts of toluene near 23°C with a mechanical stirring speed of 380rpm. AIBN (from Aldrich) was used as an initiator at a level of 0.337 parts. The polymerization reaction occurred at 68-70°C for 7 hours. When the conversion reached >60%, the residual monomers were removed through a precipitation in methanol (MeOH,x20 times). Then, the solid polymer powder was dissolved in acetone at the solid content of 25 wt.% and the polymer solution was precipitated in sufficient MeOH again. The re-precipitated white powder samples were dried at 180°C and 210°C in a vacuum oven for 8 hours and 8 hours, respectively. The melt flow rate of the polymer was measured to be 4.1 g/10minutes at 230°C under 3.8kg. The refractive index of the resulting polymer was measured at 1.491 at 589 nm.

The resulting polymer was confirmed using ¹H NMR to possess the composition of pMMA/ tert-butyl cyclohexyl methacrylate (96.5/3.5 w/w). The syndiotacticity of the copolymer was determined at 60% from the chemical shift of 44.5ppm using ¹³C NMR while the isotaticity and atacticity were measured at 4% and 36% from 45.5ppm and 45.0ppm. The glass transition temperature of the resin was measured to be 125°C in N₂ using DSC at the heating rate of 10°C/minute. The weight average molecular weight Mw of the resin was measured as being 88,000 g/mole using GPC along with a Mw/Mn (polydispersity) value of 1.9. The light transmission from a 120 um casted film was measured to be 92.2% at 560 nm using Lambda 950 with a 150 mm integrating sphere while the haze was measured to be 0.5% using a hazemeter (Haze Gard Plus from BYK).

### Example 2 (not according to the invention)

(pMMA copolymer containing 5.1% tert-butyl cyclohexyl methacrylate with Tg=~128°C). This example demonstrates the preparation of a high molecular weight copolymer of methyl methacrylate and tert-butyl cyclohexyl methacrylate, having a 51% trans/49% cis isomer ratio. 94.9 parts of methyl methacrylate and 5.10 parts of tert-butyl cyclohexyl methacrylate were charged into a reaction vessel containing 300 parts of toluene near 23°C with a mechanical stirring speed of 360rpm. AIBN (from Aldrich) and Luperox^{®} 26 (from Arkema) were used as an initiator at a level of 0.337 parts and 0.0 parts, respectively. The polymerization reaction occurred at 65-67°C for 7 hours. When the conversion reached >60%, the residual monomers were removed through a precipitation in MeOH (x20 times). Then, the solid polymer powder was dissolved in acetone at the solid content of 25 wt.% and the polymer solution was precipitated in sufficient MeOH again. The re-precipitated white powder samples were dried at 180°C and 210°C in a vacuum oven for 8 hours and 8 hours, respectively. The melt flow rate of the polymer was measured to be 2.7 g/10minutes at 230°C under 3.8kg. The refractive index of the resulting polymer was measured at 1.490 at 589 nm.

The resulting polymer was confirmed using ¹H NMR to possess the composition of pMMA/ tert-butyl cyclohexyl methacrylate (95.7/4.3 w/w). The syndiotacticity of the copolymer was determined at 60% from the chemical shift of 44.5ppm using ¹³C NMR while the isotaticity and atacticity were measured at 4% and 36% from 45.5ppm and 45.0ppm. The glass transition temperature of the resin was measured to be 128°C in N₂ using DSC at the heating rate of 10°C/minute. The weight average molecular weight Mw of the resin was measured as being 100,000 g/mole using GPC along with a Mw/Mn (polydispersity) value of 2.1. The light transmission from a 100um casted film was measured to be 92.3% at 560 nm using Lambda 950 with a 150 mm integrating sphere while the haze was measured to be 0.5% using a hazemeter (Haze Gard Plus from BYK).

### Example 3 (pMMA terpolymer with 6.1% tert-butyl cyclohexyl methacrylate and 4.6% MAA).

This example demonstrates the preparation of a high molecular weight copolymer of methyl methacrylate and tert-butyl cyclohexyl methacrylate (having a 51% trans/49% cis isomer ratio). 89.3 of methyl methacrylate, 4.6 parts of methacrylic acid and 6.1 parts of tert-butyl cyclohexyl methacrylate were charged into a reaction vessel containing 300 parts of toluene near 23°C with a mechanical stirring speed of 360rpm. In addition, AIBN (Aldrich) and Luperox^{®} 26 (from Arkema) were used as an initiator at a level of 0.350 parts and 0 parts, respectively. The polymerization reaction occurred at 65-68°C for 7 hours. When the conversion reached >60%, the residual monomers were removed through a precipitation in MeOH (x20 times). Then, the solid polymer powder was dissolved in acetone at the solid content of 25 wt.% and the polymer solution was precipitated in sufficient MeOH again. The re-precipitated white powder samples were dried at 180°C and 210°C in a vacuum oven for 8 hours and 8 hours, respectively. The melt flow rate of the polymer was measured to be 1.6 g/10minutes at 230°C under 3.8kg. The refractive index of the resulting polymer was measured at 1.491 at 589 nm.

The resulting polymer was confirmed using ¹H NMR to possess the composition of pMMA/ tert-butyl cyclohexyl methacrylate /methacrylic acid (91.3/4.9/3.8w/w/w). The syndiotacticity of the copolymer was determined at 60% from the chemical shift of 44.5ppm using ¹³C NMR while the isotaticity and atacticity were measured at 4% and 36% from 45.5ppm and 45.0ppm. The glass transition temperature of the resin was measured to be 135°C in N₂ using DSC at the heating rate of 10°C/minute. The weight average molecular weight Mw of the resin was measured as being 110,000 g/mole using GPC along with a Mw/Mn (polydispersity) value of 2.0. The light transmission from a 125 um casted film was measured to be 92.2% at 560 nm using Lambda 950 with a 150 mm integrating sphere while the haze was measured to be 0.5% using a hazemeter (Haze Gard Plus from BYK).

### Example 4 (not according to the invention)

(pMMA copolymer containing 1.0% tert-butyl cyclohexyl methacrylate with Tg=~120°C). This example demonstrates the preparation of a high molecular weight copolymer of methyl methacrylate and tert-butyl cyclohexyl methacrylate (having a 73% trans/27% cis isomer ratio). 9866 parts of methyl methacrylate and 100 parts of tert-butyl cyclohexyl methacrylate were charged in to a reaction vessel near 0°C under N₂ with a mechanical stirring speed of 100rpm. In addition, Luperox^{®} 531 (from Arkema) was used as an initiator at a level of 1.6 parts while 32 parts of n-dodecyl mercaptan (n-DDM from Aldrich) was used as a chain transfer agent, along with 1.0 part of di-tert-dodecyl disulfide (DtDDS from Arkema). The polymerization reaction occurred at 160°C for 7 hours. When the conversion reached around 50%, the residual monomers were removed through a venting system. The resulting polymer was passed through a single-screw extruder at a die temperature of 240°C while the barrel temperatures were at 230-250°C. The melt stream went through a water bath before the pelletization. Then the polymer was pelletized into 3-4mm long resin pellets and dried at 100°C in a desiccator oven for 8 hours. The melt flow rate of the polymer was measured to be 2.1 g/10minutes at 230°C under 3.8kg. The refractive index of the resulting polymer was measured at 1.491 at 589 nm.

The resulting polymer was confirmed using ¹H NMR to possess the composition of pMMA/ tert-butyl cyclohexyl methacrylate (99.1/0.9w/w). The syndiotacticity of the copolymer was determined at 50% from the chemical shift of 44.5ppm using ¹³C NMR while the isotaticity and atacticity were measured at 8% and 42% from 45.5ppm and 45.0ppm. The glass transition temperature of the resin was measured to be 120°C in N₂ using DSC at the heating rate of 10°C/minute while the Vicat temperature was detected at 120°C under 10N. The weight average molecular weight Mw of the resin was measured as being 105,000 g/mole using GPC along with a Mw/Mn (polydispersity) value of 2.0. The light transmission from a 3.2mm plaque was measured to be 92.1% at 560 nm using Lambda 950 with a 150 mm integrating sphere while the haze was measured to be 1.0% using a hazemeter (Haze Gard Plus from BYK). The tensile modulus of the test sample was at 3.2GPa while the tensile strength was at 78 MPa, along with a tensile elongation of 9.5%.

### Example 5 (not according to the invention)

(pMMA copolymer containing 3.0% tert-butyl cyclohexyl methacrylate with Tg=~119°C). This example demonstrates the preparation of a high molecular weight copolymer of methyl methacrylate and tert-butyl cyclohexyl methacrylate (having a 73% trans/27% cis isomer ratio). 9566 parts of methyl methacrylate and 300 parts of tert-butyl cyclohexyl methacrylate were charged in to a reaction vessel near 0°C under N₂ with a mechanical stirring speed of 100rpm. In addition, Luperox^{®} 531 (from Arkema) was used as an initiator at a level of 1.6 parts while 32 parts of n-dodecyl mercaptan (n-DDM from Aldrich) was used as a chain transfer agent, along with 1.0 part of di-tert-dodecyl disulfide (DtDDS from Arkema). The polymerization reaction occurred at 160°C for 7 hours. When the conversion reached around 50%, the residual monomers were removed through a venting system. The resulting polymer was passed through a single-screw extruder at a die temperature of 245°C while the barrel temperatures were at 230-250°C. The melt stream went through a water bath before pelletization. Then the polymer was pelletized into 3-4mm long resin pellets and dried at 100°C in a desiccator oven for 8 hours. The melt flow rate of the polymer was measured to be 2.7 g/10minutes at 230°C under 3.8kg. The refractive index of the resulting polymer was measured at 1.491 at 589 nm.

The resulting polymer was confirmed using ¹H NMR to possess the composition of pMMA/ tert-butyl cyclohexyl methacrylate (97.2/2.8w/w). The syndiotacticity of the copolymer was determined at 50% from the chemical shift of 44.5ppm using 13C NMR while the isotaticity and atacticity were measured at 8% and 42% from 45.5ppm and 45.0ppm. The glass transition temperature of the resin was measured to be 119°C in N₂ using DSC at the heating rate of 10°C/minute while the Vicat temperature was detected at 119°C under 10N. The weight average molecular weight Mw of the resin was measured as being 105,000 g/mole using GPC along with a Mw/Mn (polydispersity) value of 2.0. The light transmission from a 3.2mm plaque was measured to be 92.0% at 560 nm using Lambda 950 with a 150mm integrating sphere while the haze was measured to be 1.0% using a hazemeter (Haze Gard Plus from BYK). The tensile modulus of the test sample was at 3.1GPa while the tensile strength was at 70 MPa, along with a tensile elongation of 9.2%.

**Example 6** (pMMA copolymer containing 1.5% tert-butyl cyclohexyl methacrylate and 4%MAA with Tg=~123°C). This example demonstrates the preparation of a high molecular weight copolymer of methyl methacrylate and tert-butyl cyclohexyl methacrylate (having a 73% trans/27% cis isomer ratio). 9416 parts of methyl methacrylate, 400 parts of methacrylic acid, and 150parts of tert-butyl cyclohexyl methacrylate were charged in to a reaction vessel near 0°C under N₂ with a mechanical stirring speed of 100rpm. In addition, Luperox^{®} 531 (from Arkema) was used as an initiator at a level of 1.6 parts while 32 parts of n-dodecyl mercaptan (n-DDM from Aldrich) was used as a chain transfer agent, along with 1.0 part of di-tert-dodecyl disulfide (DtDDS from Arkema). The polymerization reaction occurred at 160°C for 7 hours. When the conversion reached around 50%, the residual monomers were removed through a venting system. The resulting polymer was passed through a single-screw extruder at a die temperature of 240°C while the barrel temperatures were at 230-250°C. The melt stream went through a water bath before the pelletization. Then the polymer was pelletized into 3-4mm long resin pellets and dried at 100°C in a desiccator oven for 8 hours. The melt flow rate of the polymer was measured to be 1.4 g/10minutes at 230°C under 3.8kg. The refractive index of the resulting polymer was measured at 1.492 at 589 nm.

The resulting polymer was confirmed using ¹H NMR to possess the composition of pMMA/ tert-butyl cyclohexyl methacrylate/methacylic acid (95.8/1.2/3.0w/w). The syndiotacticity of the copolymer was determined at 50% from the chemical shift of 44.5ppm using ¹³C NMR while the isotaticity and atacticity were measured at 8% and 42% from 45.5ppm and 45.0ppm. The glass transition temperature of the resin was measured to be 123°C in N₂ using DSC at the heating rate of 10°C/minute while the Vicat temperature was detected at 123°C under 10N. The weight average molecular weight Mw of the resin was measured as being 105,000 g/mole using GPC along with a Mw/Mn (polydispersity) value of 2.0. The light transmission from a 3.2mm plaque was measured to be 91.9% at 560 nm using Lambda 950 with a 150mm integrating sphere while the haze was measured to be 1.0% using a hazemeter (Haze Gard Plus from BYK). The tensile modulus of the test sample was at 3.3GPa while the tensile strength was at 75 MPa, along with a tensile elongation of 9.6%.

**Comparative 1** (pMMA copolymer containing 4.8% MAA with Tg=124°C) This example demonstrates the preparation of a high molecular weight copolymer with 4.8% methacrylic acid. 9480 parts of methyl methacrylate and 480 parts of methacrylic acid were charged in to a reaction vessel near 0°C under N₂ with a mechanical stirring speed of 100rpm. In addition, Luperox^{®} 531 (from Arkema) was used as an initiator at a level of 1.6 parts while 38 parts of n-dodecyl mercaptan (n-DDM from Aldrich) was used as a chain transfer agent, along with 1.0 part of di-tert-dodecyl disulfide (DtDDS from Arkema). The polymerization reaction occurred at 160°C for 7 hours. When the conversion reached around 50%, the residual monomers were removed through a venting system. The resulting polymer was passed through a single-screw extruder at a die temperature of 240°C while the barrel temperatures were at 230-250°C. The melt stream went through a water bath before the pelletization. Then the polymer was pelletized into 3-4mm long resin pellets and dried at 100°C in a desiccator oven for 8 hours. The melt flow rate of the polymer was measured to be 2.2 g/10minutes at 230°C under 3.8kg. The refractive index of the resulting polymer was measured at 1.494 at 589 nm.

The resulting polymer was confirmed using ¹H NMR to possess the composition of pMMA/ methacylic acid (96.3/3.7w/w). The syndiotacticity of the copolymer was determined at 50% from the chemical shift of 44.5ppm using ¹³C NMR while the isotaticity and atacticity were measured at 8% and 42% from 45.5 ppm and 45.0 ppm. The glass transition temperature of the resin was measured to be 124°C in N₂ using DSC at the heating rate of 10°C/minute while the Vicat temperature was detected at 121°C under 10N. The weight average molecular weight Mw of the resin was measured as being 82,000 g/mole using GPC along with a Mw/Mn (polydispersity) value of 2.0. The light transmission from a 3.2mm plaque was measured to be 92.0% at 560 nm using Lambda 950 with a 150mm integrating sphere while the haze was measured to be 1.0% using a hazemeter (Haze Gard Plus from BYK). The tensile modulus of the test sample was at 3.5GPa while the tensile strength was at 73 MPa, along with a tensile elongation of 6.9%.

**Table 1. Summary for pMMA co-polymer solubility in (hydrophobic) toluene and water absorption data of plaque sample.**

| | Example 1 | Example 2 | Example 3 | Example 4 | Example 5 | Example 6 | Comparative 1 |
|---|---|---|---|---|---|---|---|
| Tg (°C) | 125 | 128 | 135 | 120 | 119 | 123 | 124 |
| Vicat (°C) in 10N 50N@50°C/hour | NA | NA | NA | 120/116 | 119/115 | 123/118 | 121/116 |
| Solubility in toluene (23°C) | Clear, soluble | Clear, soluble | Clear, soluble | Clear, soluble | Clear, soluble | Clear, soluble | Clear, not fully soluble |
| Solubility in toluene (65°C) | Clear, soluble | Clear, soluble | Clear, soluble | Clear, soluble | Clear, soluble | Clear, soluble | Opaque gel |
| Water absorption (wt.%) at 23°C/504hours | NA | NA | NA | 1.254 | 1.229 | 1.400 | 1.416 |
| 85°C/85%RH exposure before crazing | NA | NA | NA | 420hours | 470hours | 240hours | 160hours |
| Polymerization type | Solution | Solution | Solution | Melt | Melt | Melt | Melt |

## Claims

1. A high Tg, optically clear, hydrophobic acrylic copolymer composition comprising a high Tg copolymer comprising:
a) from 0.1 to 20 weight percent monomer units chosen from tert-butyl cyclohexyl methacrylate, 3,3,5-trimethylcyclohexyl(meth)acrylate, and a mixture thereof;
b) from 50 to 80 weight percent methylmethacrylate monomer units;
c) other monomer units copolymerizable with methylmethacrylate, wherein said other monomer comprises from 0.01 to 10 weight percent of methacrylic acid, preferably 0.1% to 5% of methacrylic acid;
wherein said copolymer has a Tg of from 115°C to 150°C, preferably from 116°C to 140°C, and more preferably from 120°C to 130°C, wherein the Tg is measured as specified in the description,
wherein said tert-butyl cyclohexyl methacrylate, and/or 3,3,5-trimethylcyclohexyl(meth)acrylate monomer units have a trans/cis ratio of from 30/70 to 85/15, more preferably from 40/60 to 80/20, and most preferably from 50/50 to 75/25.

2. The high Tg, optically clear, hydrophobic acrylic copolymer of claim 1, wherein said other monomer comprises from 0.01 to 25 weight percent of a high Tg comonomer, selected from the group consisting of acrylic acid, itaconic acid, alpha methyl styrene, maleic anhydride, maleimide, isobornyl methacrylate, norbornyl methacrylate, t-butyl methacrylate, cyclohexyl methacrylate, acrylamide and methacrylamide, and mixtures thereof.

3. The high Tg, optically clear, hydrophobic acrylic copolymer composition of claim 1, further comprising 50 to 3500 ppm of antioxidant, based on the weight of the copolymer solids.

4. The high Tg, optically clear, hydrophobic acrylic copolymer composition of claim 1, wherein said copolymer has a weight average molecular weight of from 55,000 g/mole to 250,000 g/mole, preferably from 75,000 g/mole to 200,000 g/mole, more preferably from greater than 90,000 g/mole.to 200,000 g/mole, wherein the weight average molecular weight is measured as specified in the description.

5. The high Tg, optically clear, hydrophobic acrylic copolymer composition of claim 1, wherein said composition has a total white light transmission, TWLT of at least 89%, preferably at least 91% and more preferably at least 92%; and an optical haze of less than 5%, preferably less than 3% and most preferably less than 2%, as measured on a 3.2 mm thick plaque, using ASTM method D1003.

6. The high Tg, optically clear, hydrophobic acrylic copolymer composition of claim 1, wherein said copolymer has a refractive index of 1.47-1.50 at the wavelength of 589 nm, wherein the refractive index is determined as specified in the description.

7. The high Tg, optically clear, hydrophobic acrylic copolymer composition of claim 1, wherein said composition comprises a blend of said high Tg, clear, hydrophobic acrylic copolymer composition of claim 1, with one or more compatible polymers, wherein said high Tg polymer composition comprising a blend of said high Tg, clear hydrophobic acrylic copolymer composition is present in the blend at from 5 to 95 weight percent, preferably 5 to 75 weight percent, and more preferably at 10 to 60 weight percent of the total polymer solids.

8. An article comprising the high Tg, optically clear, hydrophobic acrylic copolymer composition of claim 1, wherein said article is a lighting pipe, thin wall parts, optical lens, extruded films, (co-)extruded sheet or profile, a thermo-formable sheet, a cast sheet, a composites, an LED/OLED optical component, a co-extruded profiles used in building & constructions or reflective signage.

## Patentansprüche

1. Optisch klare, hydrophobe Acrylcopolymerzusammensetzung mit hoher Glasübergangstemperatur, umfassend ein Copolymer mit hoher Glasübergangstemperatur, das umfasst:
a) 0,1 bis 20 Gew.-% Monomereinheiten, ausgewählt aus tert-Butylcyclohexylmethacrylat, 3,3,5-Trimethylcyclohexyl(meth)acrylat und einer Mischung davon;
b) 50 bis 80 Gew.-% Methylmethacrylat-Monomereinheiten;
c) andere mit Methylmethacrylat copolymerisierbare Monomereinheiten, wobei das andere Monomer 0,01 bis 10 Gew.-% Methacrylsäure, vorzugsweise 0,1 bis 5 Gew.-% Methacrylsäure, umfasst;
wobei das Copolymer eine Glasübergangstemperatur von 115 °C bis 150 °C, vorzugsweise von 116 °C bis 140 °C und stärker bevorzugt von 120 °C bis 130 °C aufweist, wobei die Glasübergangstemperatur wie in der Beschreibung angegeben gemessen wird,
wobei die tert-Butylcyclohexylmethacrylat- und/oder 3,3,5-Trimethylcyclohexyl(meth)acrylat-Monomereinheiten ein Trans/Cis-Verhältnis von 30/70 bis 85/15, stärker bevorzugt von 40/60 bis 80/20 und am stärksten bevorzugt von 50/50 bis 75/25 aufweisen.

2. Optisch klare, hydrophobe Acrylcopolymerzusammensetzung mit hoher Glasübergangstemperatur nach Anspruch 1, wobei das andere Monomer 0,01 bis 25 Gew.-% eines Comonomers mit hoher Glasübergangstemperatur umfasst, ausgewählt aus der Gruppe bestehend aus Acrylsäure, Itaconsäure, α-Methylstyrol, Maleinsäureanhydrid, Maleimid, Isobornylmethacrylat, Norbornylmethacrylat, tert-Butylmethacrylat, Cyclohexylmethacrylat, Acrylamid, Methacrylamid und Mischungen davon.

3. Optisch klare, hydrophobe Acrylcopolymerzusammensetzung mit hoher Glasübergangstemperatur nach Anspruch 1, ferner umfassend 50 bis 3500 ppm Antioxidationsmittel, bezogen auf das Gewicht der Copolymerfeststoffe.

4. Optisch klare, hydrophobe Acrylcopolymerzusammensetzung mit hoher Glasübergangstemperatur nach Anspruch 1, wobei das Copolymer ein gewichtsmittleres Molekulargewicht von 55.000 g/mol bis 250.000 g/mol, vorzugsweise von 75.000 g/mol bis 200.000 g/mol und stärker bevorzugt von mehr als 90.000 g/mol bis 200.000 g/mol aufweist, wobei das gewichtsmittlere Molekulargewicht wie in der Beschreibung angegeben gemessen wird.

5. Optisch klare, hydrophobe Acrylcopolymerzusammensetzung mit hoher Glasübergangstemperatur nach Anspruch 1, wobei die Zusammensetzung eine Gesamt-Weißlichttransmission (TWLT) von mindestens 89 %, vorzugsweise mindestens 91 % und stärker bevorzugt mindestens 92 % sowie eine optische Trübung von weniger als 5 %, vorzugsweise weniger als 3 % und am stärksten bevorzugt weniger als 2 % aufweist, gemessen an einer 3,2 mm dicken Platte unter Verwendung des ASTM-Verfahrens D1003.

6. Optisch klare, hydrophobe Acrylcopolymerzusammensetzung mit hoher Glasübergangstemperatur nach Anspruch 1, wobei das Copolymer einen Brechungsindex von 1,47 bis 1,50 bei einer Wellenlänge von 589 nm aufweist, wobei der Brechungsindex wie in der Beschreibung angegeben bestimmt wird.

7. Optisch klare, hydrophobe Acrylcopolymerzusammensetzung mit hoher Glasübergangstemperatur nach Anspruch 1, wobei die Zusammensetzung eine Mischung der optisch klaren, hydrophoben Acrylcopolymerzusammensetzung mit hoher Glasübergangstemperatur nach Anspruch 1 mit einem oder mehreren kompatiblen Polymeren umfasst, wobei die Polymerzusammensetzung mit hoher Glasübergangstemperatur, umfassend die Mischung der optisch klaren, hydrophoben Acrylcopolymerzusammensetzung mit hoher Glasübergangstemperatur, in der Mischung in einer Menge von 5 bis 95 Gew.-%, vorzugsweise 5 bis 75 Gew.-% und stärker bevorzugt 10 bis 60 Gew.-%, bezogen auf die gesamten Polymerfeststoffe, vorhanden ist.

8. Artikel, umfassend die optisch klare, hydrophobe Acrylcopolymerzusammensetzung mit hoher Glasübergangstemperatur nach Anspruch 1, wobei der Artikel ein Lichtleiter, dünnwandige Teile, eine optische Linse, extrudierte Folien, (co-)extrudierte Platten oder Profile, eine thermoformbare Platte, eine Gussplatte, ein Verbundwerkstoff, eine LED-/OLED-optische Komponente, coextrudierte Profile zur Verwendung im Bauwesen oder reflektierende Beschilderung ist.

## Revendications

1. Composition copolymère acrylique à Tg élevée, optiquement transparente et hydrophobe, comprenant un copolymère à Tg élevée comprenant :
a) de 0,1 à 20 % en poids d'unités monomères sélectionnées parmi le méthacrylate de tert-butylcyclohexyle, le (méth)acrylate de 3,3,5-triméthylcyclohexyle et un mélange de ceux-ci,
b) de 50 à 80 % en poids d'unités monomères de méthacrylate de méthyle,
c) d'autres unités monomères copolymérisables avec le méthacrylate de méthyle, ledit autre monomère comprenant de 0,01 à 10 % en poids d'acide méthacrylique, de préférence de 0,1 % à 5 % d'acide méthacrylique ;
ledit copolymère présentant une Tg de 115 °C à 150 °C, de préférence de 116 °C à 140 °C, et plus préférablement de 120 °C à 130 °C, la Tg étant mesurée de la manière indiquée dans la description,
lesdites unités monomères de méthacrylate de tert-butylcyclohexyle et/ou de (méth)acrylate de 3,3,5-triméthylcyclohexyle présentant un rapport trans/cis de 30/70 à 85/15, de préférence de 40/60 à 80/20, et plus préférablement de 50/50 à 75/25.

2. Copolymère acrylique à Tg élevée, optiquement transparent et hydrophobe, selon la revendication 1, dans lequel ledit autre monomère comprend de 0,01 à 25 % en poids d'un comonomère à Tg élevée, sélectionné dans le groupe constitué par l'acide acrylique, l'acide itaconique, l'alpha-méthylstyrène, l'anhydride maléique, le maléimide, le méthacrylate d'isobornyle, le méthacrylate de norbornyle, le méthacrylate de t-butyle, le méthacrylate de cyclohexyle, l'acrylamide et le méthacrylamide et des mélanges de ceux-ci.

3. Composition copolymère acrylique à Tg élevée, optiquement transparente et hydrophobe selon la revendication 1, comprenant en outre de 50 à 3500 ppm d'antioxydant, par rapport au poids des solides de copolymère.

4. Composition copolymère acrylique à Tg élevée, optiquement transparente et hydrophobe selon la revendication 1, dans laquelle ledit copolymère présente un poids moléculaire moyen en poids de 55 000 g/mole à 250 000 g/mole, de préférence de 75 000 g/mole à 200 000 g/mole, plus préférablement supérieure à 90 000 g/mole et inférieure ou égale à 200 000 g/mole, la masse moléculaire moyenne en poids étant mesurée de la manière indiquée dans la description.

5. Composition copolymère acrylique à Tg élevée, optiquement transparente et hydrophobe selon la revendication 1, ladite composition présentant une transmission de la lumière blanche totale (TWLT, total white light transmission) d'au moins 89 %, de préférence d'au moins 91 % et plus préférablement d'au moins 92 % ; et un voile optique inférieur à 5 %, de préférence inférieur à 3 % et plus préférablement inférieur à 2 %, mesuré sur une plaque de 3,2 mm d'épaisseur, selon la méthode ASTM D1003.

6. Composition copolymère acrylique à Tg élevée, optiquement transparente et hydrophobe selon la revendication 1, dans laquelle ledit copolymère présente un indice de réfraction de 1,47 à 1,50 à la longueur d'onde de 589 nm, l'indice de réfraction étant déterminé de la manière indiquée dans la description.

7. Composition copolymère acrylique à Tg élevée, optiquement transparente et hydrophobe selon la revendication 1, ladite composition comprenant un mélange de ladite composition copolymère acrylique à Tg élevée, transparente et hydrophobe selon la revendication 1, avec un ou plusieurs polymères compatibles, ladite composition polymère à Tg élevée comprenant un mélange de ladite composition copolymère acrylique à Tg élevée, transparente et hydrophobe étant présente dans le mélange à raison de 5 à 95 % en poids, de préférence de 5 à 75 % en poids, et plus préférablement de 10 à 60 % en poids par rapport au total des solides de polymère.

8. Article comprenant la composition copolymère acrylique à Tg élevée, optiquement transparente et hydrophobe selon la revendication 1, ledit article étant un tube d'éclairage, des pièces à paroi mince, une lentille optique, des films extrudés, une feuille ou un profilé (co)extrudé, une feuille thermoformable, une feuille moulée, un composite, un composant optique LED/OLED, un profilé coextrudé utilisé dans le bâtiment et la construction ou dans la signalisation réfléchissante.
